# EUROPEAN PATENT APPLICATION

(11) **EP 2 692 309 A2**
(43) Date of publication of application: **05.02.2014**
(21) Application number: 12763490.5
(22) Date of filing: 29.03.2012
(51) Int. Cl.: A61C 7/20, A61C 7/22, A61C 7/26

(54) **WIRE FOR CORRECTING BIMAXILLARY PROTRUSION, AND BIMAXILLARY PROTRUSION CORRECTION SYSTEM COMPRISING SAME**

(30) Priority: 29.03.2011 KR 20110028467
(71) Applicant: Kwon, Soon Yong, Seoul 137-060 (KR)
(72) Inventor: Kwon, Soon Yong, Seoul 137-060 (KR)
(74) Representative: Geyer, Fehners & Partner
(86) International application number: PCT/KR2012/002299
(87) International publication number: WO 2012/134183

(57) **Abstract**

Disclosed are an orthodontic wire of giving orthodontic force to anterior teeth in order to correct bimaxillary protrusion, and an orthodontic system with the same. The orthodontic wire for correcting bimaxillary protrusion includes a lingual arch wire which is curved corresponding to a set of the anterior teeth so as to be fitted to a lingual side of the anterior teeth; a traction wire which is provided in the lingual arch wire for connection with a traction member of giving lingual traction force; and a pair of support wires which is extended backward from the lingual arch wire so as to provide the lingual arch wire with reaction to the lingual traction force. With this configuration, it is possible to prevent an inturned tooth when the bimaxillary protrusion is corrected, and it is also possible to correct aggressive protrusion without surgical operation since traction force is transmitted to an alveolar bone.

## Description

### [Technical Field]

The present invention relates to a brace, and more particularly to an orthodontic wire used for correcting bimaxillary protrusion due to tooth protrusion and/or alveolar bone protrusion and an orthodontic system with the same.

### [Background Art]

For most modern people, look, in particular, appearance has been established as one of standards for judging a person at interviews for employment, admission into a school, etc., and acted as a very important factor in social life, for example, a great part of interpersonal relationship, etc. Particularly, the appearance generally depends on teeth and a set of teeth. Accordingly, orthodontics has recently been prevalent for correcting teeth, a set of teeth or a facial skeleton, along with surgical plastic operation.

The orthodontics is a concept that refers to a treatment of correcting malocclusion, for example, narrow orthodontics of simply strengthening irregular teeth to a nice set of teeth. The orthodontics can correct various skeletal irregularities that may occur during a growth process, thereby contributing to healthy oral organization and further making a facial line beautiful to get beautiful impression.

The orthodontics may be divided into orthodontic Treatment for gradually moving the set of teeth to improve misaligned teeth or the like odontoparallaxis, and jaw correction surgery for skeletal improvement by applying a surgical operation to maxilla bones.

In other words, if misalignment between upper and lower teeth or abnormal facial skeleton is too severe to be treated by only the orthodontics, jaw correction surgery may be applied together with the orthodontics so that the abnormality of the facial skeleton itself can be corrected by the surgery in order to make a functional and beautiful face.

For example, growing children can avoid the jaw correction surgery by skeletal improvement or the like method using the orthodontic treatment, but only the orthodontic treatment may be insufficient for a fully-grown adult. In this case, the jaw correction surgery may be conducted along with the orthodontic treatment.

The orthodontic treatment may be broadly classified into labial orthodontics and lingual orthodontics. Here, the labial orthodontics refers to a method of straightening teeth by attaching a brace to a surface of a tooth at a labial side, and the lingual orthodontics refers to a method of straightening teeth by attaching a brace to a surface of a tooth at a lingual side.

As an example of the brace, there are an orthodontic wire (generally called an 'arch wire'), a bracket for supporting the orthodontic wire, etc. The bracket is a labial-side surface and/or a lingual-side surface of the tooth. A plurality of brackets are provided along a direction of tooth arrangement, and connected by the orthodontic wire, thereby transmitting orthodontic force from the orthodontic wire to the set of teeth.

The orthodontic treatment includes a plurality of orthodontic steps conducted in sequence and for a long time. As an example of the orthodontic treatment, there is a surgical operation or the like of employing the arch wire and the bracket to straighten irregular teeth of a patient who has teeth crowding in an anterior teeth or a patient who has a large gap between the teeth of an anterior teeth.

Meanwhile, correction for moving the teeth toward the lingual side during the orthodontic treatment is called lingual traction. In the case of tooth protrusion where a patient's teeth are abnormally protrudes frontward, bimaxillary protrusion that a mouth abnormally protrudes frontward occurs and therefore the foregoing lingual traction is proposed as a method for correcting the bimaxillary protrusion.

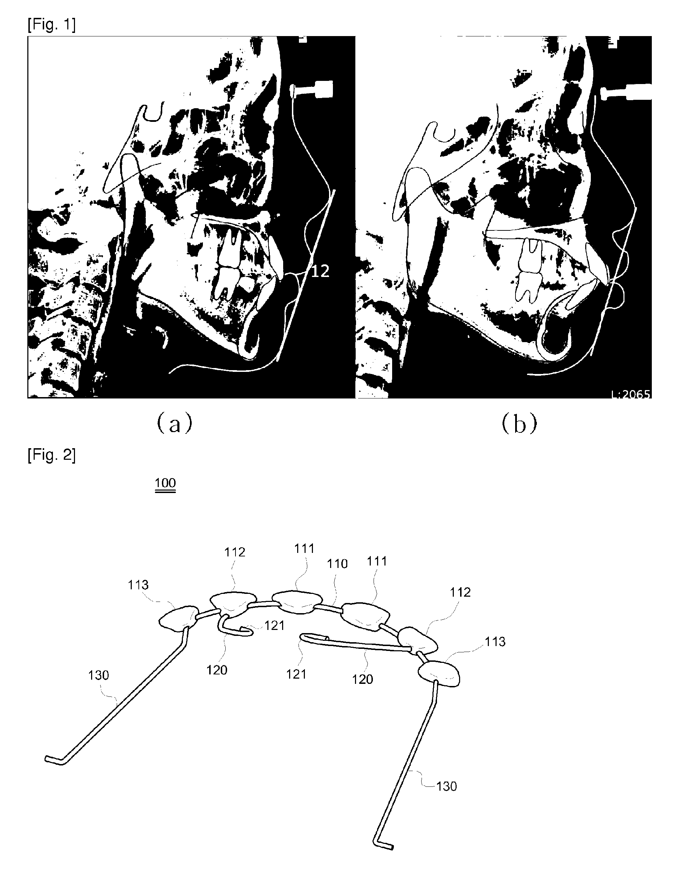

In a normal mouth, a lower lip meets a line connecting the tip of a nose and a jaw, and an upper lip is positioned a little inside such a line as shown in (a) of FIG. 1. On the other hand, bimaxillary protrusion refers to a shape in which the lips protrude out of the line connecting the tip of the nose and the jaw as shown in (b) of FIG. 1, and is generally caused by the foregoing tooth protrusion or alveolar bone protrusion (skeletal protrusion).

The tooth protrusion is the kind of malocclusion, in which front teeth are inclined in the form of protruding relatively excessively forward as compared with the root of tooth, i.e., the end of a crown as the growth of the alveolar bone is insufficient to accommodate the number of current teeth. In severe cases, it is difficult to shut the mouth, and the tooth protrusion may have a bad influence on total impression.

To correct the foregoing bimaxillary protrusion, an orthodontic system is installed in a patient's oral cavity. However, there are conventional problems that the root of tooth becomes shorter while the anterior teeth are attracted backward; the anterior teeth are excessively inclined toward a lingual side and thus become inturned teeth while the teeth are attracted backward; transverse inclination occurs as left and right vertical positions of the anterior teeth are dislocated; and in the case of bimaxillary protrusion due to the alveolar bone protrusion, the patient is burdened, it takes long time in treatment and high cost is burdened because surgical operation is used to correct the bimaxillary protrusion.

Accordingly, the present inventor has developed an orthodontic wire for bimaxillary protrusion and an orthodontic system with the same, which can correct the tooth protrusion while preventing damage in the root of tooth and the inturned tooth due to excessive inclination of the tooth; and further correct protrusion of a maxilla bone, specifically an A-point (i.e., a jawbone directly inside a philtrum) in the case of bimaxillary protrusion due to the alveolar bone protrusion, i.e., the aggressive protrusion

### [Disclosure]

### [Technical Problem]

An aspect of the present invention is to provide an orthodontic wire for bimaxillary protrusion and an orthodontic system with the same, which can prevent anterior teeth from inclination when the bimaxillary protrusion is corrected by lingual traction.

Another aspect of the present invention is to provide an orthodontic wire for bimaxillary protrusion and an orthodontic system with the same, which can be used as a jaw orthopedic appliance for correcting the bimaxillary protrusion due to alveolar bone protrusion (i.e., skeletal protrusion).

### [Technical Solution]

In accordance with one aspect of the present invention, there is provided an orthodontic wire for correcting bimaxillary protrusion, which gives orthodontic force to anterior teeth for correcting the bimaxillary protrusion, the orthodontic wire comprising: a lingual arch wire which is curved corresponding to a set of the anterior teeth so as to be fitted to a lingual side of the anterior teeth; a traction wire which is provided at the lingual arch wire for connection with a traction member giving lingual traction force; and a pair of support wires which is extended backward from the lingual arch wire so as to provide the lingual arch wire with reaction to the lingual traction force.

In accordance with another aspect of the present invention, there is provided an orthodontic system for correcting bimaxillary protrusion, which gives orthodontic force to anterior teeth for correcting the bimaxillary protrusion, the orthodontic system comprising: a lingual arch wire which is curved corresponding to a set the anterior teeth so as to be fitted to a lingual side of the anterior teeth; a traction wire which is provided in the lingual arch wire for giving lingual traction force; a pair of support wires which is extended backward from the lingual arch wire so as to provide the lingual arch wire with reaction to the lingual traction force; wire supports which comprise a guide hole respectively, through which the support wires passes, and fixed to the lingual sides of both molar portion; a traction member which is connected to the traction wire and gives the lingual traction force to the lingual arch wire; and an anchor which is fixed to a palate so as to support the traction member.

According to an exemplary embodiment of the present invention, it is possible to prevent the anterior teeth from excessively falling toward the lingual side when the lingual traction force is applied to the anterior teeth in order to correct the bimaxillary protrusion, and it is possible to correct the bimaxillary protrusion due to the alveolar bone protrusion, thereby getting a beautiful and functional set of teeth.

### [Advantageous Effects]

In accordance with an aspect of the present invention, an orthodontic wire for bimaxillary protrusion and an orthodontic system with the same have the following technical effects.

First, according to an exemplary embodiment, when lingual traction is applied to anterior teeth, support wires can apply reaction force to the anterior teeth, thereby preventing the teeth from being inturned and preventing the root of tooth from being shortened.

Second, according to an exemplary embodiment, the support wires apply force in a tooth axis direction to the anterior teeth as reaction to the lingual traction applied to the anterior teeth, so that alveolar bone together with the teeth can move back, thereby not only correcting the bimaxillary protrusion due to alveolar bone protrusion without an surgical operation but also having a rhino-surgical effect (on raising a nose), lightening a burden with surgical operation, and reducing costs in correcting the bimaxillary protrusion.

Third, according to an exemplary embodiment, the support wires are bent when the lingual traction is applied to the anterior teeth, and thus force is added in a tooth axial direction to both molar portion supporting the support wires, thereby having an effect on correcting a jawbone, i.e., having an jaw orthopedic effect.

Fourth, according to an exemplary embodiment, the orthodontic wire used for correcting the bimaxillary protrusion has a simple structure, thereby reducing costs of manufacturing the orthodontic wire for bimaxillary protrusion and reducing costs of medical treatment for correcting the bimaxillary protrusion.

### [Description of Drawings]

FIG. 1 is an X-ray image showing a normal mouth and bimaxillary protrusion.
FIG. 2 is a perspective view of an orthodontic wire for bimaxillary protrusion according to an embodiment of the present invention.
FIG. 3 is a view showing a state that an orthodontic system with the orthodontic wire for bimaxillary protrusion of FIG. 2 is installed in an intraoral upper jaw.
FIG. 4 is a lateral view showing that an anterior teeth is moved by a lingual orthodontic traction system of FIG. 3.
FIG. 5 is a view showing that a labial orthodontic wire is installed in the anterior teeth.
FIG. 6 is a view showing another embodiment of the orthodontic wire for bimaxillary protrusion is installed in a lower jaw.

### [Best Mode]

Hereinafter, embodiments of the present invention will be described with reference to accompanying drawings. For description of the embodiments, like numerals refer to like elements, and repetitive descriptions will be avoided as necessary.

First, referring to FIGs. 2 to 4, an orthodontic wire for bimaxillary protrusion and an orthodontic system with the same according to an embodiment of the present invention will be described.

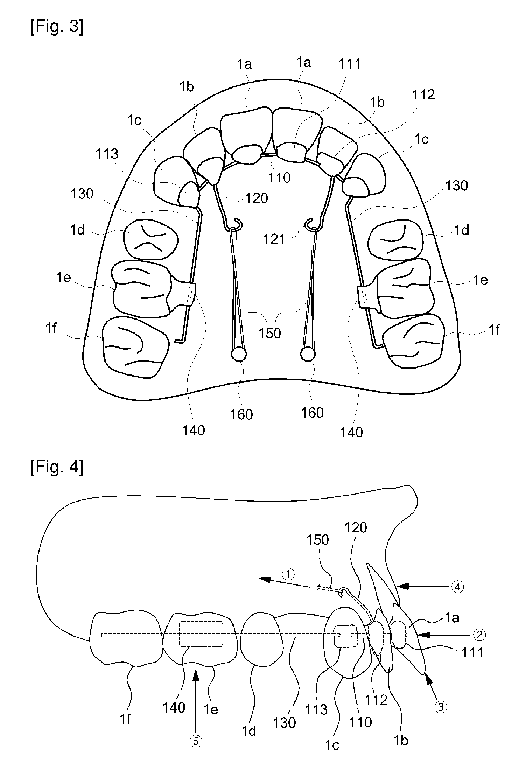

Among the accompanying drawings, FIG. 2 is a perspective view of an orthodontic wire for bimaxillary protrusion according to an embodiment of the present invention, FIG. 3 is a view showing a state that an orthodontic system with the orthodontic wire for bimaxillary protrusion of FIG. 2 is installed in an intraoral upper jaw, and FIG. 4 is a lateral view showing that an anterior teeth is moved by a lingual orthodontic traction system of FIG. 3.

According to an embodiment, the orthodontic wire 100 for correcting bimaxillary protrusion is a brace that is installed at a lingual side of a tooth for correcting the bimaxillary protrusion and transmits orthodontic force to anterior teeth. Referring to FIGs. 2 to 4, the orthodontic wire 100 for bimaxillary protrusion according to an exemplary embodiment includes a lingual arch wire 110, a traction wire 120, and a pair of support wires 130.

The lingual arch wire 110 has a curvature so as to be fitted to a lingual side of anterior teeth 1 a, 1 b and 1 c along a set of the anterior teeth. In more detail, the lingual arch wire 110 can be bent along a patient's set of teeth in a patient's oral model (not shown) and made on the patient's oral model. Further, the lingual arch wire 110 is provided with fixing members 111, 112 and 113 to fix the lingual arch wire 110 to the anterior teeth, for example, lingual surfaces of six anterior teeth (i.e., left and right central incisors, left and right lateral incisors, left and right canine teeth).

In more detail, the fixing members 111, 112 and 113 are spaced apart from each other along a longitudinal direction of the lingual arch wire 110 and respectively coupled to the anterior teeth 1a, 1b and 1c. For example, the fixing members 111, 112 and 113 are soldered to the lingual arch wire 110, and attached to the lingual surface of the anterior teeth by a dental adhesive. Here, a paste for the soldering, i.e., a soldering paste may include silver soldering, but not limited thereto.

The lingual arch wire 110 is manufactured to have a predetermined length corresponding to a patient's oral structure so that both ends thereof can be positioned on the lingual surfaces of left and right dogteeth (i.e., canine teeth) 1 c, i.e., a pair of teeth forming both lateral teeth of the anterior teeth 1 a, 1 b and 1 c.

Further, the traction wire 120 is an element provided at the lingual arch wire 110 so as to backward traction force, i.e., lingual retraction force to the lingual arch wire 110. The traction wire 120 is extended backward from the lingual arch wire 110.

More particularly, the traction wire 120 has a first end connected to the lingual arch wire 110, and a second end connected to a traction member 150 such as a rubber band or a spring that gives the lingual traction force to the lingual arch wire 110.

The second end, i.e., the back end of the traction wire 120 is formed with a hooking portion 121 such as a hook for connecting with the traction member 150. Further, the traction wire 120 in this embodiment is slantly extended toward a plate, i.e., a back upside, and fastened to the lingual arch wire 110, in particular to the fixing member so as not to rotate with respect to the lingual arch wire 110 by soldering or the like method. Therefore, when bending action is applied to the traction wire 120, moment is generated in the lingual arch wire 110.

The pair of support wires 130 is provided so that reaction to the lingual traction force can be given to the lingual arch wire 110. The pair of support wires 130 are extended backward from the lingual arch wire 110.

In more detail, when the lingual traction force acting in a backward direction of the anterior teeth 1 a, 1 b and 1 c is applied to the anterior teeth, backward moving force is applied to the anterior teeth 1 a, 1 b and 1 c. Further, if the lingual traction force generates the moment in the anterior teeth 1 a, 1 b and 1 c, the anterior teeth 1 a, 1 b and 1 c are rotated in a certain direction, for example, rotated toward the lingual side, and on the other hand the roots of the anterior teeth 1 a, 1 b and 1 c protrude toward the labial side. Accordingly, they may become inturned teeth.

In this embodiment, in order to prevent the inturned tooth, the traction wire 120 is slantly extended toward a back upside, a vertical position of the hooking portion 121 is positioned in the lingual side of the root portion of the anterior teeth 1 a, 1 b and 1 c at the height as a root portion of the anterior teeth. According to this embodiment, large moment is not generated in or very small moment is generated in the anterior teeth 1 a, 1 b and 1 c since an acting line of traction force generated by the traction member 150 passes by an alveolar bone and the root portion of tooth, so called an A-point, thereby moving the anterior teeth 1 a, 1 b and 1 c backward without excessive rotation.

According to an exemplary embodiment, the traction member 150 is supported by an anchor 160 fixed to the palate so that lingual traction force can be applied to the orthodontic wire 100 for bimaxillary protrusion. In this embodiment, the anchor 160 is implanted into the palate in the form of a screw.

Here, difference in a vertical position between the anchor 160 and the hooking portion 121 of the traction wire may cause force in a direction toward the root of tooth to be applied to the anterior teeth 1 a, 1b and 1 c, thereby having an effect on moving the anterior teeth 1 a, 1b and 1c in a direction toward the root of tooth, i.e., toward the alveolar bone.

Each of the support wires 130 receives the bending action due to the lingual traction force, and applies reaction force to the lingual arch wire 110 as reaction to the bending action. The reaction force applied by the support wire 130 decreases or counterbalances the force or moment applied by the traction wire 120 to the anterior teeth, thereby preventing the anterior teeth 1 a, 1 b and 1 c from falling toward the lingual side, preventing an unbalanced horizontal and vertical position of the anterior teeth (i.e., difference in the vertical position at left and right sides), and adjusting movement of the anterior teeth by the support wire 130.

Further, the support wires 130 are respectively extended backward from both ends of the lingual arch wire 110, and longitudinally movably inserted in a pair of wire supporters 140 fixed to both molar portion 1d, 1e and 1 f, in particular, the lingual surfaces of both first molar teeth 1 e.

Each of the wire supports 140 is formed with a guide hole in a mesiodistal direction, i.e., a forward and backward direction. If the lingual traction force due to the traction member 150 is applied to the traction wire 120, the support wires 130 receive the bending action, i.e., bending stress while lengthwise moving along the guide hole.

The bending stress generated in the support wire 130 applies force in a tooth axial direction to the molar portion 1d, 1e and 1f and resists the lingual traction force applied to the anterior teeth 1 a, 1 b and 1 c.

In this embodiment, the pair of traction wires 120 are provided on the lingual arch wire 110. Further, the support wires 130 are provided outside the traction wires 120, and fixed to the lingual arch wire 110, i.e., to the fixing member by soldering or the like method so as not to rotate with respect to the lingual arch wire 110. Accordingly, when the bending action is applied to the support wire 130, bending moment is generated in the lingual arch wire 110.

In general, when the lingual traction force acts on the lingual arch wire 110, moment is generated with respect to the center of resistance in the anterior teeth 1 a, 1 b and 1 c, and thus the end of the tooth may excessively inturned toward the lingual side. However, according to an exemplary embodiment, the traction wires 120 and the support wires 130 minimize or prevent such excessive deformation. Here, the center of resistance refers to a certain position of the anterior teeth, in which the anterior teeth can horizontally move as it is without falling when the anterior teeth receive the lingual traction force.

Below, movement of the anterior teeth by the orthodontic wire 100 for bimaxillary protrusion and the orthodontic system with the same according to an exemplary embodiment will be described with reference to FIG. 4.

Referring to FIG. 4, when the lingual traction force (i.e., the arrow ①) caused by the traction member 150 is applied to the lingual arch wire 110 through the traction wire 120, the anterior teeth 1 a, 1 b and 1 c are moved in a direction of the arrow ②, and further force in a direction of the arrow ③ may be applied to the anterior teeth by difference in the vertical position between the hooking portion 121 and the anchor 160.

At this time, since the action line of the lingual traction force passes by the root portions of teeth in the anterior teeth 1 a, 1 b and 1 c, the alveolar bone, in particular the A-point is also moved backward in a direction of the arrow ④, thereby lowering protruded height of the alveolar bone and reflectively raising a nose.

Meanwhile, the support wire 130 gradually moves in the lengthwise direction while receiving the bending action due to the lingual traction force transmitted through the lingual arch wire 110, and resists the rotation of the anterior teeth by applying reaction force to the lingual arch wire as the reaction to the lingual traction force.

Also, the support wire 130 receives the bending force due to the lingual traction force, and applies force to the molar portion, e.g., the first molar tooth 1 e in the direction toward the root of tooth, e.g., in the direction of the arrow ⑤ by a medium of the wire supporter 140 so that the molar area Id, 1e and 1f can raise with regard to the vertical position, thereby moving a jaw joint and achieving jaw correction, and correcting excessive exposure of gums.

According to the present invention, it is possible to prevent the anterior teeth from excessively rotating toward the lingual side (i.e., in a clockwise direction with respect to FIG. 4) and falling while the anterior teeth 1 a, 1 b and 1 c are retracted toward the lingual side, and it is also possible to correct the bimaxillary protrusion due to alveolar bone protrusion and tooth protrusion while preventing the inturned tooth since the alveolar bone can move backward by applying backward traction force to the alveolar bone of the anterior teeth 1 a, 1 b and 1 c.

Further, the support wire 130 can resist the rotation of the anterior teeth even though the traction wire 120 is varied in an inclined angle or action position of the lingual traction force is varied to apply the moment due to the lingual traction force to the anterior teeth.

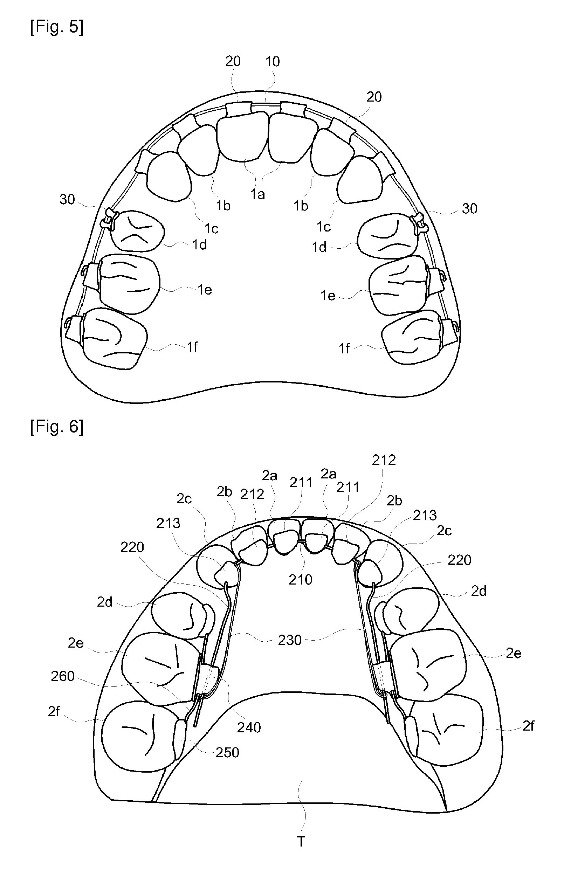

In general, the first premolar tooth is generally extracted to secure a space for moving the anterior teeth, and the labial orthodontic wire 10, and the anterior tooth brackets 20 and the molar tooth brackets 30 supporting the orthodontic wire 10 are installed in the labial side of the teeth as shown in FIG. 5, thereby performing the correction of the tooth protrusion together with labial orthodontics for straightening the set of teeth.

Next, FIG. 6 shows an exemplary embodiment of the orthodontic wire for correcting bimaxillary protrusion, which is installed in a lower jaw, which includes a lingual arch wire 210 fitted to the lingual side along anterior teeth 2a, 2b and 2c of the lower jaw, and a pair of support wires 220 extended from the lingual arch wire 210.

However, in the case that the orthodontic wire for bimaxillary protrusion is installed in the lower jaw as shown in FIG. 6, it is difficult to install the anchor for giving the lingual traction force because of tongue T. Therefore, the traction member 230 for giving the lingual traction force is supported by the wire supporter 240, and the traction wire described in the foregoing embodiment may be omitted. Further, the lingual arch wire 210 is provided with a plurality of fixing members 211, 212 and 213.

The wire supporter 240 is fastened to both molar portion 2d, 2e and 2f of the lower jaw, for example, to the lingual surface of the first molar tooth 2e, and supports the support wire 220, and a fastener 250 and a connection wire 260 may be used to make the molar portion 2d, 2e and 2f as a single body. In addition, this may be equally applied to the upper jaw.

Further, the traction member 230 has a first end supported by the lingual arch wire 210 and a second end penetrating the wire supporter 240 and hooked by a back end of the support wire 220 exposed to the back of the wire supporter 240, thereby giving the lingual traction force to the mandible anterior teeth. Here, the support wire 220 may perform the same function as described in the foregoing embodiment.

Although some embodiments have been described herein with reference to the accompanying drawings, it will be understood by those skilled in the art that these embodiments are provided for illustration only, and various modifications, changes, alterations and equivalent embodiments can be made without departing from the scope of the present invention.

Therefore, the scope and sprit of the present invention should be defined only by the accompanying claims and equivalents thereof.

### [Industrial Applicability]

The present invention relates to a brace or orthodontic instrument, and more particularly to an orthodontic wire used for correcting bimaxillary protrusion, and has industrial applicability to a field of manufacturing the brace, thereby not only correcting the bimaxillary protrusion due to alveolar bone protrusion without an surgical operation but also having a rhino-surgical effect (on raising a nose), lightening a burden with surgical operation, and reducing costs in correcting the bimaxillary protrusion.

## Claims

1. An orthodontic wire for correcting bimaxillary protrusion, which gives orthodontic force to anterior teeth for correcting the bimaxillary protrusion, the orthodontic wire comprising:
a lingual arch wire which is curved corresponding to a set of the anterior teeth portion so as to be fitted to a lingual side of the anterior teeth;
a traction wire provided at the lingual arch wire for connection with a traction member giving lingual traction force; and
a pair of support wires extended backward from the lingual arch wire so as to provide the lingual arch wire with reaction to the lingual traction force.

2. The orthodontic wire according to claim 1, wherein the pair of support wires are fixed to the lingual arch wire so as to receive bending action due to the lingual traction force.

3. The orthodontic wire according to claim 1, wherein the pair of support wires are respectively extended backward from both ends of the lingual arch wire, and movably inserted in a pair of wire supports provided to lingual sides of both molar portion.

4. The orthodontic wire according to claim 3, wherein the pair of support wires are coupled to the both ends of the lingual arch wire by soldering.

5. The orthodontic wire according to any one of claims 1 to 4, wherein the lingual arch wire comprises fixing members for fixing the lingual arch wire to the anterior teeth; and the fixing members are spaced apart from each other along a longitudinal direction of the lingual arch wire so as to be respectively fixed to the anterior teeth.

6. The orthodontic wire according to claim 1, wherein the pair of support wires are respectively extended backward from both ends of the lingual arch wire so as to be supported by a pair of wire supports provided to lingual sides of both molar portion.

7. The orthodontic wire according to claim 6, wherein the pair of support wires and the lingual arch wire are formed by one wire as a single body.

8. The orthodontic wire according to claim 1, wherein the traction wire comprises a first end fixed to the lingual arch wire, and a second end formed with a hooking portion for connection with the traction member; and the hooking portion is positioned at the same height as a root portion of the anterior teeth.

9. An orthodontic system for correcting bimaxillary protrusion, which gives orthodontic force to anterior teeth for correcting the bimaxillary protrusion, the orthodontic system comprising:
a lingual arch wire which is curved corresponding to a set of the anterior teeth so as to be fitted to a lingual side of the anterior teeth;
a traction wire which is provided at the lingual arch wire for giving lingual traction force;
a pair of support wires which is extended backward from the lingual arch wire so as to provide the lingual arch wire with reaction to the lingual traction force;
a wire supporter which comprises a guide hole through which the support wire passes, and fixed to the lingual sides of both molar portion;
a traction member which is connected to the traction wire and gives the lingual traction force to the lingual arch wire; and
an anchor which is fixed to a palate so as to support the traction member.
